# EUROPÄISCHE PATENTSCHRIFT

(11) **EP 3 308 106 B1**
(45) Veröffentlichungstag und Bekanntmachung des Hinweises auf die Patenterteilung: **20.01.2021**
(21) Anmeldenummer: 17714389.8
(22) Anmeldetag: 09.02.2017
(51) Int. Cl.: G01D 5/14, G01D 11/04

(54) **SENSOR UND SENSORELEMENT**
SENSOR AND SENSOR ELEMENT
CAPTEUR ET ÉLÉMENT SENSIBLE

(30) Priorität: 19.02.2016 DE 102016202637
(43) Veröffentlichungstag der Anmeldung: 18.04.2018
(73) Patentinhaber: Micro-Epsilon Messtechnik GmbH & Co. KG, 94496 Ortenburg (DE)
(72) Erfinder: HACKL, Josef, 94032 Passau (DE); SEIKOWSKY, Axel, 94496 Ortenburg (DE); WASMEIER, Martin, 94496 Ortenburg (DE)
(74) Vertreter: Patent- und Rechtsanwälte Ullrich & Naumann
(86) Internationale Anmeldenummer: PCT/DE2017/200016
(87) Internationale Veröffentlichungsnummer: WO 2017/140313

(56) Entgegenhaltungen:
- EP-A2- 1 825 225
- WO-A1-2008/098279
- WO-A1-2013/016765
- DE-A1-102011 112 826

## Beschreibung

Die Erfindung betrifft einen Sensor zur kontaktlosen Abstands- oder Positionsmessung eines Objekts gemäß Anspruch 1.

Zur Erfassung von Distanz, Weg, Position und ähnlicher Messgrößen werden in der Industrie neben taktilen Messverfahren auch bevorzugt berührungslose Messverfahren verwendet, um eine unerwünschte Wechselwirkung (zum einen Verschleiß an der Messeinrichtung, zum anderen Einfluss auf das Messobjekt) zwischen Messeinrichtung und Messobjekt zu vermeiden. Eine häufig anzutreffende Gattung entsprechender Sensoren sind feldgebundene Sensoren. Durch eine geeignete Anordnung wird eine Analogie von der Änderung im elektrischen oder magnetischen Feld auf die Änderung von Weg/Position/Distanz erreicht.

Beispiele für solche Sensoren sind kapazitive Wegaufnehmer, oder induktive Wegaufnehmer im allgemeinen, wie z.B. Wirbelstrom-Wegaufnehmer oder auch transformatorische Prinzipien wie induktive Wegaufnehmer nach dem LVDT-Prinzip oder Spulenanordnungen, deren magnetische Kopplung sich über den relativen Abstand zueinander ändert. Um den Einfluss von Störgrößen, welche die Analogie von Feldänderung zur Wegänderung verfälschen, möglichst gering zu halten, werden solche Messsysteme häufig differentiell ausgeführt. Einfachstes Beispiel hierfür ist eine Halbbrückenanordnung, bei der zwei gleiche Messelemente in zwei Brückenzweigen einer Wheatstone-Brückenschaltung elektrisch derart verschaltet sind, dass sich Störeinflüsse gegenseitig aufheben. Damit lassen sich störende Einflüsse wie z.B. Temperaturänderungen unterdrücken. In der Praxis gelingt dies jedoch nur begrenzt, da das Prinzip der differentiellen Signalauswertung die Störgrößen nur dann unterdrückt, wenn diese auf beide Teilpfade gleichermaßen einwirken.

Dokument DE102011112826 offenbart einen induktiv arbeitenden Sensor, insbesondere zur Abstands- oder Positionsmessung.

Es treten jedoch bei Temperaturänderungen nicht nur Gradienten über die Zeit, sondern auch über den Ort auf. Diese werden durch die differentielle Anordnung nicht ausgeglichen. Ein Beispiel dafür sind induktive Abstandssensoren, deren Messelemente (Spulen) in ein Gehäuse eingebaut sind. Eine beispielsweise stirnseitig angeordnete Spule ist dem Messobjekt zugewandt und misst dynamisch dessen Abstand, eine zweite Spule im Gehäuse misst statisch gegen ein Referenzobjekt im Gehäuse. In Halbbrückenanordnung kann eine elektrisch symmetrische Anordnung der Messelemente erreicht werden. Allerdings gilt dies nur in einem bestimmten Abstand und bei statischen Verhältnissen. Ändert sich die Temperatur des Messobjektes und damit an der Messspule anders als die Temperatur des Sensorgehäuses und damit an der Referenzspule, führt dies zu (örtlichen) Temperaturgradienten, die die Symmetrie stören und damit das Messergebnis beeinflussen. Ebenso führen z. B. mechanische Dehnungen oder Stauchungen im Sensorelement aufgrund von Temperaturänderungen zu nicht deterministischen und damit nicht ausgleichbaren Verlagerungen oder Verformungen des Sensorelementes, welche die Messung ebenfalls verfälschen.

Ähnliches gilt für Luftfeuchtänderungen. Auch hier greift der differentielle Ansatz nur, wenn beide Sensorpfade die exakt gleiche Änderung zur gleichen Zeit erfahren. Dies ist bei den aus der Praxis bekannten Bauformen nicht der Fall, da Feuchte meist nur auf das stirnseitige Messelement wirkt, nicht aber auf das im Gehäuse integrierte Referenzelement. Mit weiteren Störgrößen wie Druck, Vibration verhält es sich ähnlich.

Zusammengefasst haben die bekannten Sensoren folgende Probleme: Aufgrund der Bauform und der Einhausung des Sensorelements verursachen Störgrößen zum einen Gradienten, welche zu Messfehlern führen. Zum anderen kommt es aufgrund von nicht deterministischen Veränderungen im Sensorelement, verursacht durch die Störgrößen oder Änderungen (Alterung), über die Zeit zu weiteren Messfehlern.

Es ist daher die Aufgabe der Erfindung, diese Nachteile zu vermeiden und einen Sensor derart auszugestalten und weiterzubilden, dass präzise und stabile Messungen möglich sind. Entsprechendes gilt für das Sensorelement.

Voranstehenden Aufgabe ist durch die Merkmale des Anspruchs 1 gelöst.

Zu Grunde gelegt ist ein differenzielles Messsystem nach dem kapazitiven oder induktiven Prinzip. Differentiell bedeutet hier, dass zunächst die elektrische Anordnung bereits einer Halbbrücken- oder Vollbrückenanordnung entspricht. Aufgabe ist es also, auch eine mechanisch symmetrische Anordnung zu erhalten, so dass Umgebungseinflüsse wie zum Beispiel Temperatur, Druck, Feuchte etc. symmetrisch auf das Sensorelement wirken und die Messung nicht verfälschen. Sensorelement bedeutet in dem Zusammenhang das wesentliche Element eines Sensors oder Aufnehmers, das aus einem oder mehreren Messelementen besteht. Beim induktiven Sensor ist das Sensorelement beispielsweise eine Spule mit einem Mittenabgriff, wodurch zwei Teilspulen entstehen, die als Messelemente dienen. Beim kapazitiven Sensor besteht das Sensorelement zumindest aus einer Messelektrode und einer Referenzelektrode.

Wesentlich ist, dass das Sensorelement einen symmetrischen Aufbau der Messelemente besitzt und zusätzlich noch in der Messanordnung symmetrisch eingebaut ist.

Der symmetrische Aufbau des Sensorelementes kann dadurch erreicht werden, dass die Messelemente sowohl auf der Vorder- als auch auf der Rückseite des Sensors einen gleichen Abstand zur Gehäuseoberfläche aufweisen. Bei Sensoren, wo die Messelemente in ein Substrat, bestehend aus Mehrlagen-Leiterplatten oder Mehrlagen-Keramik (LTCC) eingebettet sind, wird dies beispielsweise dadurch erreicht, dass der Lagenaufbau (Anzahl der Lagen, Abstand der Lagen und die Lage der Messelemente) symmetrisch gewählt wird. Beispielsweise würden bei einer 7-lagigen Spule 8 Lagen Trägermaterial verwendet.

Vorteilhaft ist es, wenn das Trägermaterial die gleiche Dicke aufweist, so dass der Abstand der Spulenlagen zur Oberfläche in beide Richtungen gleich ist. Damit wirkt beispielsweise eine Temperaturänderung der Umgebung auf beide Seiten des Sensorelementes gleich ein. Zunächst stellt sich ein örtlicher Temperaturgradient von der Außenseite des Sensorelementes hin zu den im Inneren eingebetteten Spulen ein. Da diese aber in gleichen Abständen zur Oberseite angeordnet sind, wirkt letztlich die Temperaturänderung auf die Messelemente in gleicher Weise ein. Somit ist wieder eine symmetrische Beeinflussung gegeben, die durch die differentielle Auswertung kompensiert wird. Man könnte auch zwei Messelemente übereinander anordnen, indem beispielsweise zwei dreilagige Spulen übereinander im mehrlagigen Substrat integriert werden.

Bei kapazitiven Sensoren wird die Messelektrode nahe der Stirnfläche in der ersten Lage des Substrates angeordnet. Die Referenzelektrode wird auf der vom Messobjekt abgewandten Rückseite in der letzten Lage angeordnet. Bei kapazitiven Sensoren wird üblicherweise noch eine sogenannte Schirmelektrode verwendet, die auf gleichem Potential wie die Messelektrode gehalten wird, und die das Messfeld gegenüber seitlichen Einflüssen abschirmt. Auch die Anordnung der Schirmelektroden (jeweils eine für Messelektrode und Referenzelektrode) ist symmetrisch. Vorteilhaft ist es, wenn dann noch zwischen der Elektrodenanordnung von Mess- und Referenzelektrode mit zugeordneten Schirmelektroden eine Massefläche eingefügt wird. Somit entsteht ein symmetrischer Aufbau im Hinblick auf die Anordnung der Elektroden im Substrat.

Die Messelemente können auch nebeneinander angeordnet werden. Beispielsweise können in besagtem Keramiksubstrat mehrlagigen Spulen nebeneinander angeordnet werden. Bei einem rechteckigen Substrat würde man rechteckige Spulen nebeneinander anordnen. Bei einem runden Substrat könnten die Messelemente in Form von Sektoren, z.B. vier Teilspulen in Form von vier Sektoren gleichmäßig über den Umfang verteilt werden. Es wäre auch ein Ineinanderschachteln der Spulen denkbar, indem z.B. abwechselnd jede Lage einer Spule jeweils einer anderen Teilspule zugeordnet ist. Damit könnte eine besonders gleichmäßige Beeinflussung der Teilspulen erreicht werden.

Bei kapazitiven Sensoren können Mess- und Referenzelektrode auch nebeneinander angeordnet sein.

Üblicherweise muss das Sensorelement an einem Objekt angeordnet werden. Eine vollflächige Befestigung auf dem Objekt wirkt jedoch der symmetrischen Anordnung entgegen. Würde man das Sensorelement bzw. die Spulenanordnung, die in eine mehrlagige Keramik eingebettet ist, vollflächig an einer Halterung befestigen, würden Temperaturänderungen über die Halterung entweder verstärkt oder verzögert auf das Sensorelement einwirken. Wenn beispielsweise der Halter sich stärker erwärmt (weil dieser das Sensorelement an einem Maschinenteil befestigt ist, das sich erwärmt), wirkt die höhere Temperatur zunächst auf die Rückseite des Sensorelementes. Dadurch entsteht ein Temperaturgradient über das Sensorelement, der durch die differentielle Anordnung der Messelemente nicht kompensierbar ist.

Dies kann dadurch erreicht werden, dass das Sensorelement auch in Bezug seiner Halterung nahezu symmetrisch angeordnet wird. Dies erfolgt mit einer punktuellen Anbindung, z. B. einer Dreipunktauflage, wodurch die Auflagefläche minimiert wird. Werden für die drei Punkte beispielsweise Kugeln verwendet, besteht die Auflagefläche nur aus drei Punktkontakten. Über solche Punktkontakte ist z.B. ein Wärmeeintrag sehr stark reduziert, weil damit die thermische Masse entkoppelt wird. Durch die Dreipunktauflage ist das Sensorelement quasi freischwebend, wodurch Umgebungseinflüsse von allen Seiten gleich und damit wieder symmetrisch auf das (bereits symmetrisierte) Sensorelement einwirken. Durch eine geeignet Wahl der Kugeln kann der thermische Übergang gesteuert werden. Wird ein möglichst geringer thermischer Übergang gewünscht, werden Kugeln aus einem Material mit geringem Wärmeübergangskoeffizienten eingesetzt (z. B. Si3N4, Al203, ZrO2).

Neben dem Wärmeübergang kann durch das Kugelmaterial auch der thermische Ausdehnungskoeffizient geeignet gewählt werden. Kugeln mit niedrigem Ausdehnungskoeffizienten verändern den Abstand zum Halter nur gering, mit Kugeln mit höherem Ausdehnungskoeffizienten kann dagegen gezielt eine temperaturabhängige Abstandsänderung herbeigeführt werden. Durch unterschiedliches Kugelmaterial wäre somit auch eine gezielte Verkippung möglich.

Die Wahl des Kugelmaterials wird auch vom Messprinzip beeinflusst. Bei induktiven oder kapazitiven Sensoren ist es sinnvoll, nichtmetallische Kugeln aus Keramik oder ähnlichen Werkstoffen zu verwenden, da dann eine Beeinflussung der Messelemente ausgeschlossen wird.

Anstelle von Kugeln könnten auch Spitzen oder ähnliche Ausgestaltungen mit geringer Auflagefläche gewählt werden. Entscheidend ist die thermische Entkopplung vom Trägermaterial, bei gleichzeitiger Freistellung des Sensorelements für die umgebende Atmosphäre.

Durch eine Anordnung der Kugeln, mit einer Kugel als Festlager und zwei Kugeln als Loslager, ist zusätzlich eine Entkopplung in seitliche Richtung von unterschiedlicher Ausdehnung von Sensorelement und Trägermaterial des Halters möglich. Diese Anordnung ist besonders vorteilhaft auch im Hinblick auf einen Austausch des Sensorelementes. Falls das Sensorelement getauscht werden muss, wird die Position des getauschten Sensorelementes durch die Dreipunktanordnung eindeutig definiert. Das Festlager, beispielsweise in Form einer Pfanne oder eines Prismas, in dem die erste Kugel liegt, definiert einen Fixpunkt. Die zweite Kugel liegt in einer v-förmigen Rille, wodurch ein Freiheitsgrad in eine Richtung definiert wird. Die dritte Kugel liegt auf einer Fläche, wodurch ein zusätzlicher Freiheitsgrad in eine zweite Richtung besteht. Damit kann eine relative Längenausdehnung zwischen Sensorelement und Halter aufgrund unterschiedlicher Materialien ausgeglichen werden, ohne dass es zu Verspannungen des Sensorelementes kommt. Außerdem wird beim Tausch des Sensorelements die Anforderung an dessen Passgenauigkeit reduziert, so dass auch mechanische Toleranzen beim Tausch ausgeglichen werden. Die Auflageflächen (Pfanne, Rille, Fläche) können möglichst hart ausgeführt sein, damit die Kugeln nicht eingedrückt werden und quasi nur ein Punktkontakt ensteht.

Durch die Positionierung der Auflagepunkte relativ zum Sensorelement sowie durch die geeignete Wahl des Fixpunktes kann die thermische Ausdehnung des Sensorelementes derart gestaltet werden, dass diese relativ zu einer bestimmten Position minimiert wird. Günstig ist es beispielsweise, dass der Fixpunkt an der Stelle des Messelements liegt, das die Messgröße mit den höchsten Anforderungen erfasst.

Sofern das Sensorelement auf dem Halter aufliegt, genügt die Schwerkraft zur stabilen Fixierung auf dem Dreipunktlager. In anderen Einbausituationen muss das Sensorelement gegen die Kugeln gedrückt werden. Dies geschieht beispielsweise mittels einer Feder, die eine einstellbare Kraft erzeugt und das Sensorelement gegen Kugeln und den Halter drückt.

Um bei feldgebundenen Sensoren eine Beeinflussung der Messung zu vermeiden, ist es sinnvoll, die Feder und das Befestigungselement aus nichtmetallischem Material zu fertigen. Beispielweise kann eine Kunststofffeder eingesetzt werden, die mit einer Kunststoffschraube vorgespannt wird. Denkbar sind auch andere nichtmetallische Werkstoffe, wie z.B. Keramik. Der Einbau der Feder erfolgt zweckmäßig innerhalb der drei Auflagepunkte der Kugeln, beispielsweise im Schwerpunkt des Dreiecks. Die Kraft und die Aufnahme der Feder und des Befestigungselementes müssen so ausgelegt werden, dass die Bewegung des Sensorelementes durch thermische Dehnungen nicht eingeschränkt wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht, geschnitten, den grundsätzlichen Aufbau eines zum Stand der Technik gehörenden gattungsgemäßen Sensors,
- Fig. 2: in einer schematischen Ansicht ein Ausführungsbeispiel eines erfindungsgemäßen Sensorelements, bei dem eine mehrlagige Spule zwei Teilspulen umfasst,
- Fig. 3: in einer schematischen Ansicht einen Sensor mit einem Sensorelement gemäß Fig. 2, wobei das Sensorelement per Dreipunktauflage auf einem Halter gelagert ist,
- Fig. 4: in einer schematischen Ansicht ein weiteres Ausführungsbeispiel eines erfindungsgemäßen Sensors mit einem Sensorelement ähnlich dem gemäß Fig. 2, wobei das Sensorelement per drei Punktauflagen auf dem Halter gelagert ist,
- Fig. 5a: in einer schematischen Ansicht ein erfindungsgemäßes Sensorelement mit mehrlagiger Spule, umfassend zwei Teilspulen,
- Fig. 5b: in einer schematischen Draufsicht den Gegenstand aus Fig. 5a, wobei die in unterschiedlichen Lagen befindlichen Windungen als Projektion dargestellt sind,
- Fig. 6: in einer schematischen Ansicht ein weiteres Ausführungsbeispiel eines erfindungsgemäßen Sensorelements, bei dem integrierte Elektroden eine kapazitive Messung ermöglichen und
- Fig. 7: in einer schematischen Ansicht einen Sensor mit einem Sensorelement gemäß Fig. 6, wobei das Sensorelement über Kugeln auf der Auflage dreipunktgelagert ist.

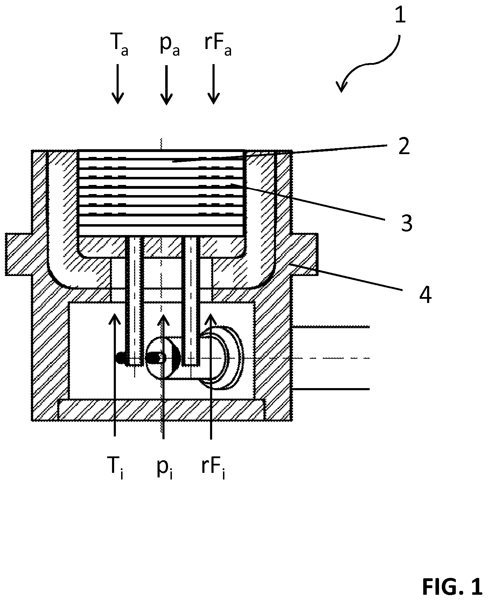

Figur 1 zeigt einen herkömmlichen induktiven Wegsensor (1) nach dem Stand der Technik. Das Sensorelement (2) aus mehrlagiger Keramik enthält eine mehrlagige Spule (3), die in ein Gehäuse (4) eingesetzt ist. Die äußeren Umgebungseinflüsse, z.B. Temperatur Tₐ, Druck pₐ und relative Feuchte rFₐ unterscheiden sich von den inneren Zuständen Tᵢ, pᵢ und rFᵢ. Es wirken auf das Sensorelement (2) unterschiedliche Einflüsse, die zu einer Asymmetrie (Gradienten) führen.

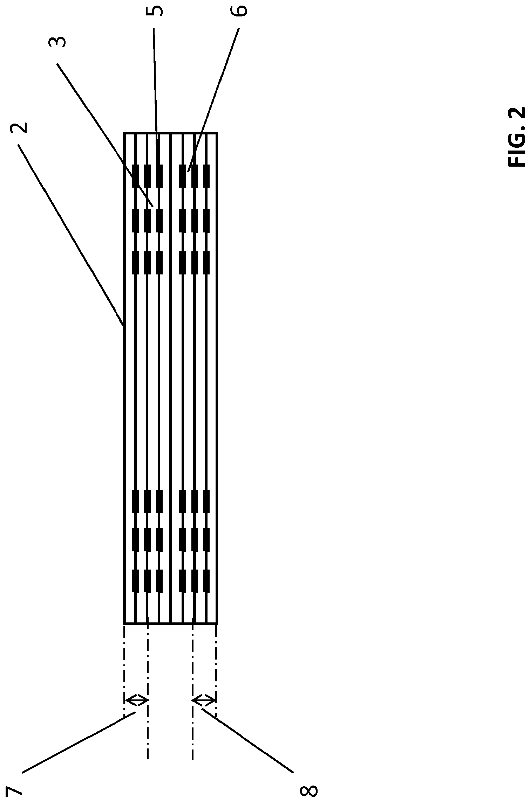

Figur 2 zeigt in Schnittdarstellung ein symmetrisches Sensorelement (2) mit einer mehrlagigen Spule (3). Die Spule besteht aus zwei Teilspulen (5 und 6), die symmetrisch zueinander und übereinander angeordnet sind. Die Teilspulen sind innerhalb des Sensorelementes symmetrisch aufgebaut, d.h. der Abstand vom Spulenmittelpunkt zur Vorderseite (7) und zur Rückseite (8) des Sensorelementes ist gleich. Jede Teilspule (5, 6) besteht aus jeweils drei Windungen pro Lage, die in drei Lagen angeordnet sind.

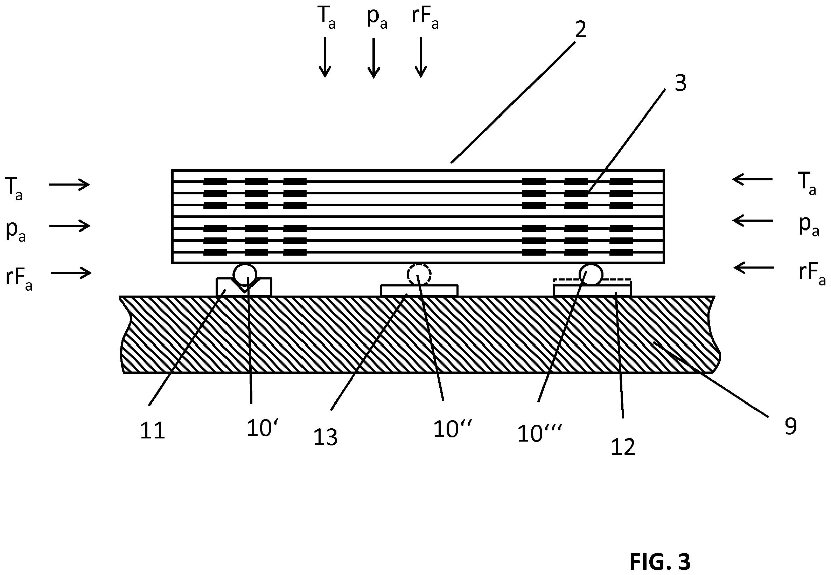

Figur 3 zeigt das symmetrische Sensorelement (2), das auf einem Halter (9) aufliegt. Die Auflage wird durch drei Kugeln (10', 10" und 10"') erzeugt und besteht somit nur aus drei Punkten. Die Kugeln liegen im Halter in einem Prisma (11), einer Rille (12) und auf einer Fläche (13) auf. Somit ist durch das Prisma ein Fixpunkt (Festlager) definiert. Ausgehend vom Fixpunkt kann sich das Sensorelement in eine Richtung entlang der Rille (12) und gleichzeitig in die andere Richtung auf der Fläche (13) relativ zum Halter bewegen, z. B. infolge thermischer Ausdehnung. Durch die Entkopplung vom Halter können Umgebungseinflüsse wie z. B. Temperatur Ta, Druck pₐ und relative Feuchte rFa von allen Seiten gleichzeitig und symmetrisch auf das Sensorelement einwirken. Der übersichtlichen Darstellung wegen ist ein die Anordnung zusammenhaltendes und gegebenenfalls das Sensorelement in seiner Bewegung zurücksetzendes Element, beispielsweise ein Federelement, nicht gezeigt.

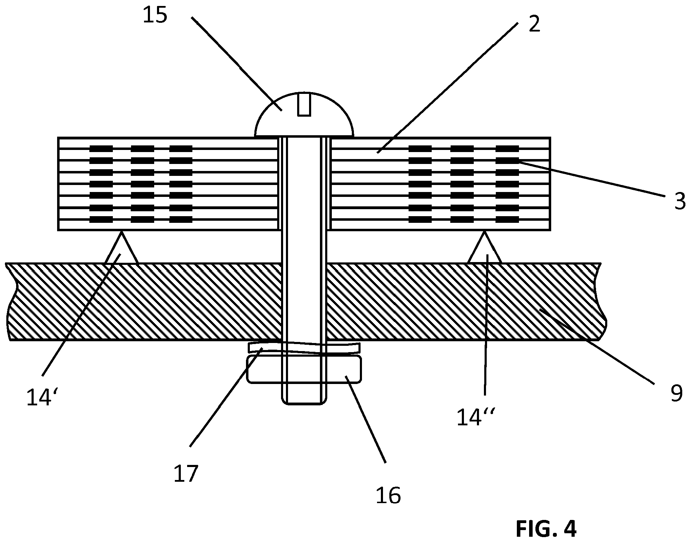

Figur 4 zeigt anstelle von Kugeln drei Spitzen (14', 14", 14'") als punktförmige Auflagepunkte. Das Sensorelement wird mit einer Kunststoffschraube (15) mit Mutter (16) auf dem Halter (9) befestigt. Als Feder dient eine Wellscheibe (17). Die dritte Spitze (14'") ist nicht gezeigt.

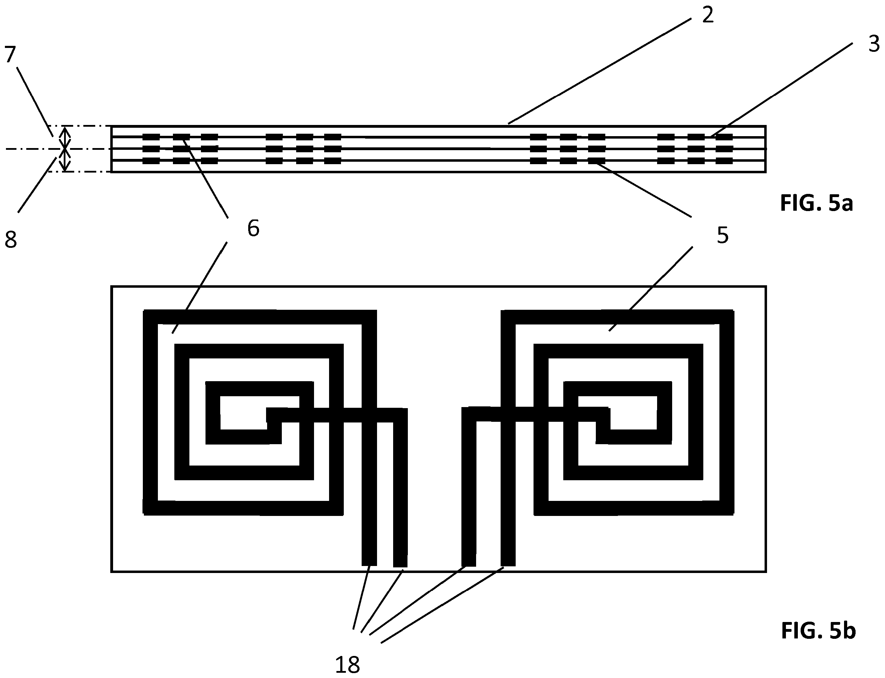

Figur 5 zeigt in der oberen Hälfte in Schnittdarstellung ein symmetrisches Sensorelement (2) mit einer mehrlagigen Spule (3). Die Spule besteht aus zwei Teilspulen (5 und 6), die symmetrisch zueinander und nebeneinander angeordnet sind. Die Teilspulen sind innerhalb des Sensorelementes symmetrisch aufgebaut, d.h. der Abstand vom Spulenmittelpunkt zur Vorderseite (7) und zur Rückseite (8) des Sensorelementes ist gleich. Jede Teilspule (5,6) besteht aus jeweils drei Windungen pro Lage, die in drei Lagen angeordnet sind. In der unteren Hälfte ist das Sensorelement in Draufsicht gezeigt, wobei die in unterschiedlichen Lagen befindlichen Windungen als Projektion dargestellt sind. Die notwendigen Durchkontaktierungen sind nicht gezeigt. Die einzelnen Abgriffe (18) der Teilspulen sind einzeln nach außen geführt, so dass die Spulen in geeigneter Weise miteinander verschaltet werden können.

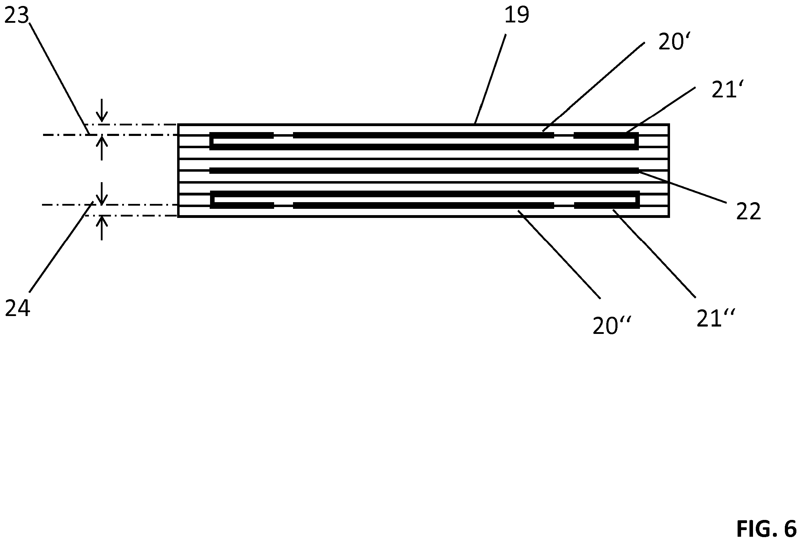

Figur 6 zeigt ein kapazitives Sensorelement (19) mit einer Messelektrode (20') und der zugehörigen Referenzelektrode (20"). Beide Elektroden werden mit einer Schirmelektrode (21', 21") gegen seitliche und rückwärtige Einflüsse abgeschirmt. Zusätzlich ist zwischen der Elektrodenanordnung noch eine Massefläche (22) im Substrat eingefügt. Die Elektrodenanordnung ist symmetrisch zu Ober- bzw. Unterseite angeordnet, so dass der Abstand (23,44) zur Oberfläche gleich groß ist.

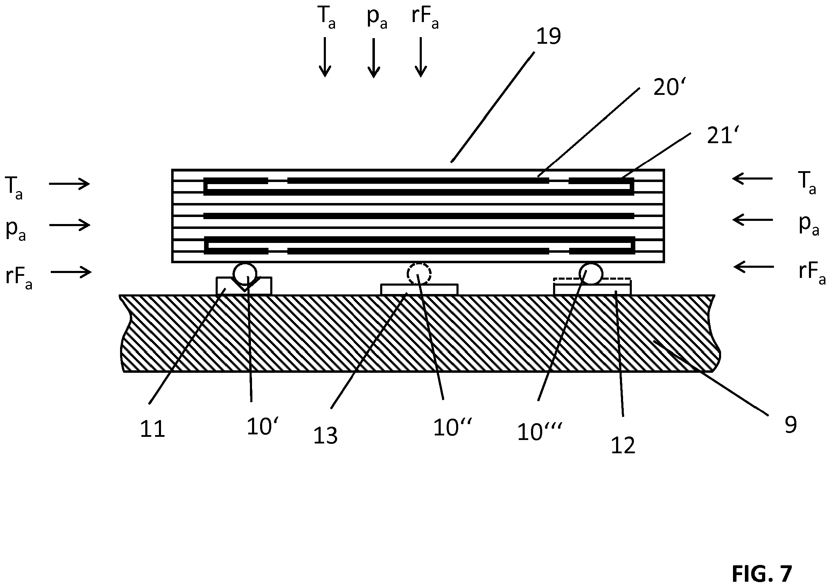

Figur 7 zeigt ein kapazitives Sensorelement mit Dreipunktauflage analog den Figuren 5a und 5b.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Wegsensor
- 2: Sensorelement
- 3: Spule
- 4: Gehäuse
- 5: Teilspule
- 6: Teilspule
- 7: Abstand zur Vorderseite des Sensorelements
- 8: Abstand zur Rückseite des Sensorelements
- 9: Halter
- 10', 10", 10'": Kugel
- 11: Prisma
- 12: Rille
- 13: Fläche
- 14', 14", 14"': Spitze
- 15: Kunststoffschraube
- 16: Mutter
- 17: Wellscheibe
- 18: Abgriff
- 19: kapazitives Sensorelement
- 20': Messelektrode
- 20": Referenzelektrode
- 21', 21": Schirmelektrode
- 22: Messfläche
- 23: Abstand zur Vorderseite des Sensorelements
- 24: Abstand zur Rückseite des Sensorelements

## Patentansprüche

1. Sensor zur kontaktlosen Abstands- oder Positionsmessung eines Objekts,
mit einem induktiven oder kapazitiven Sensorelement, wobei Messelemente des Sensorelements in ein mehrlagiges Substrat eingebettet sind und gemeinsam mit dem Substrat das Sensorelement bilden, und wobei das Sensorelement in Bezug auf dessen Messelemente geometrisch und/oder elektrisch symmetrisch aufgebaut ist, und
mit einem Halter, wobei eine gegenüber dem Halter beabstandete Lagerung des Sensorelements mit geringstmöglichem Kontakt am Sensorelement derart realisiert ist, dass das Sensorelement von dem Halter thermisch entkoppelt und für die umgebende Atmosphäre freigestellt ist.

2. Sensor nach Anspruch 1, **dadurch gekennzeichnet, dass** das Sensorelement kapazitiv arbeitet, wobei die Messelemente als Elektroden ausgeführt sind, wobei die Elektroden in das mehrlagige Substrat eingebettet sind und wobei die Elektrodenanordnung vorzugsweise zur Ober- und/oder Unterseite des Sensorelements symmetrisch ausgebildet und angeordnet sind.

3. Sensor nach Anspruch 1, **dadurch gekennzeichnet, dass** das Sensorelement induktiv arbeitet, wobei die Messelemente als Spule bzw. Spulen ausgeführt ist/sind, wobei die Spule/Spulen in das mehrlagige Substrat eingebettet ist/sind und wobei die Spule zwei Teilspulen umfasst, die symmetrisch zueinander ausgebildet und/oder angeordnet sind.

4. Sensor nach Anspruch 3, **dadurch gekennzeichnet, dass** die Teilspulen symmetrisch nebeneinander oder symmetrisch übereinander oder symmetrisch ineinander oder symmetrisch ineinander verschachtelt angeordnet sind.

5. Sensor nach Anspruch 3 oder 4, **dadurch gekennzeichnet, dass** die Teilspulen derart ausgebildet sind, dass der Abstand vom Spulenmittelpunkt zur Vorderseite und zur Rückseite des Sensorelements im Wesentlichen gleich ist.

6. Sensor nach einem der Ansprüche 1 bis 5, **dadurch gekennzeichnet, dass** das Sensorelement über eine Linienauflage mit zwei oder mehreren Auflagelinien oder über eine Punktauflage mit drei oder mehreren Auflagepunkten auf dem Halter gelagert ist.

7. Sensor nach Anspruch 6, **dadurch gekennzeichnet, dass** die Lagerung des Sensorelements auf dem Halter durch zwei oder drei Walzen bzw. Rollen oder durch vorzugsweise drei Kugeln definiert ist.

8. Sensor nach Anspruch 7, **dadurch gekennzeichnet, dass** die Kugeln in einen Prisma, eine Rille oder Nut und auf einer Fläche liegen, wobei durch das Prisma ein Fixpunkt im Sinne eines Festlagers definiert ist.

9. Sensor nach Anspruch 6, **dadurch gekennzeichnet, dass** die Lagerung durch auf dem Halter befestigte, vorzugsweise drei Kegel, Pyramiden, etc. mit endseitigen Spitzen definiert ist, die für das Sensorelement Auflagepunkte bilden.

10. Sensor nach einem der Ansprüche 1 bis 9, **dadurch gekennzeichnet, dass** das Substrat eine Mehrlagen-Leiterplatte ist.

11. Sensor nach einem der Ansprüche 1 bis 9, **dadurch gekennzeichnet, dass** das Substrat eine Mehrlagen-Keramik ist.

## Claims

1. Sensor for contactless spacing or position measurement of an object, having an inductive or capacitive sensor element, wherein measurement elements of the sensor element are embedded in a multi-layered substrate and together with the substrate form the sensor element, and wherein the sensor element with respect to the measurement elements thereof is constructed in a geometrically and/or electrically symmetrical manner, and
having a retention member, wherein a bearing of the sensor element which is spaced apart with respect to the retention member is produced with the least possible contact with the sensor element in such a manner that the sensor element is thermally decoupled from the retention member and is released for the surrounding atmosphere.

2. Sensor according to claim 1, **characterised in that** the sensor element operates in a capacitive manner, wherein the measurement elements are constructed as electrodes, wherein the electrodes are embedded in the multi-layered structure and wherein the electrode arrangements are preferably constructed and arranged symmetrically with respect to the upper and/or lower side of the sensor element.

3. Sensor according to claim 1, **characterised in that** the sensor element operates in an inductive manner, wherein the measurement elements is/are constructed as a coil or coils, wherein the coil/coils is/are embedded in the multi-layered substrate and wherein the coil comprises two part-coils which are constructed and/or arranged symmetrically relative to each other.

4. Sensor according to claim 3, **characterised in that** the part-coils are arranged symmetrically beside each other or symmetrically one above the other or symmetrically one inside the other or symmetrically nested one inside the other.

5. Sensor according to claim 3 or 4, **characterised in that** the part-coils are constructed in such a manner that the spacing of the coil centre from the front side and from the rear side of the sensor element is substantially identical.

6. Sensor according to any one of claims 1 to 5, **characterised in that** the sensor element is supported by means of a linear support with two or more support lines or via a point support with three or more support locations on the retention member.

7. Sensor according to claim 6, **characterised in that** the support of the sensor element on the retention member is defined by means of two or three drums or rollers or preferably by three balls.

8. Sensor according to claim 7, **characterised in that** the balls are located in a prism, a channel or a groove and on a surface, wherein a fixing location in the context of a fixed bearing is defined by the prism.

9. Sensor according to claim 6, **characterised in that** the bearing is defined by means of preferably three cones, pyramids, etcetera, which are secured to the retention member with end-side tips which form support locations for the sensor element.

10. Sensor according to any one of claims 1 to 9, **characterised in that** the substrate is a multi-layered printed circuit board.

11. Sensor according to any one of claims 1 to 9, **characterised in that** the substrate is a multi-layered ceramic material.

## Revendications

1. Capteur pour la mesure sans contact de la distance ou de la position d'un objet, avec un élément de capteur inductif ou capacitif, dans lequel des éléments de mesure de l'élément de capteur sont intégrés dans un substrat multicouche et forment ensemble, avec le substrat, l'élément de capteur et dans lequel l'élément de capteur est structuré de manière symétrique géométriquement et/ou électriquement en ce qui concerne ses éléments de mesure,
avec un support, dans lequel un logement de l'élément de capteur, distant du support, est réalisé avec le moins de contact possible sur l'élément de capteur, de façon à ce que l'élément de capteur soit découplé thermiquement du support et soit dégagé pour l'atmosphère environnante.

2. Capteur selon la revendication 1, **caractérisé en ce que** l'élément de capteur fonctionne de manière capacitive, dans lequel les éléments de mesure sont conçus comme des électrodes, dans lequel les électrodes sont intégrées dans le substrat multicouche et dans lequel la disposition des électrodes est réalisée et disposée de préférence de manière symétriques par rapport au côté supérieur et/ou inférieur de l'élément de capteur.

3. Capteur selon la revendication 1, **caractérisé en ce que** l'élément de capteur fonctionne de manière inductive, dans lequel les éléments de mesure sont conçus comme une resp. des bobines, dans lequel la resp. les bobine(s) est/sont intégrées dans le substrat multicouche et dans lequel la bobine comprend deux bobines partielles qui sont réalisées et/ou disposées de manière symétrique entre elles.

4. Capteur selon la revendication 3, **caractérisé en ce que** les bobines partielles sont juxtaposées symétriquement ou superposées symétriquement ou disposées symétriquement les unes dans les autres ou imbriquées symétriquement.

5. Capteur selon la revendication 3 ou 4, **caractérisé en ce que** les bobines partielles sont conçues de façon à ce que la distance entre le centre des bobines et le côté avant et le côté arrière de l'élément de capteur est globalement la même.

6. Capteur selon l'une des revendications 1 à 5, **caractérisé en ce que** l'élément de capteur est logé sur le support par l'intermédiaire d'un appui linéaire avec deux lignes d'appui ou plus ou par l'intermédiaire d'un appui ponctuel avec trois points d'appui ou plus.

7. Capteur selon la revendication 6, **caractérisé en ce que** le logement de l'élément de capteur sur le support est défini par deux ou trois rouleaux ou de préférence par trois billes.

8. Capteur selon la revendication 7, **caractérisé en ce que** les billes se trouvent dans un prisme, une gorge ou une rainure et sur une surface, dans lequel le prisme définit un point fixe au sens d'un palier fixe.

9. Capteur selon la revendication 6, **caractérisé en ce que** le logement est défini par trois cônes, pyramides, etc. avec des pointes aux extrémités, fixées sur le support, qui constituent des points d'appui pour l'élément de capteur.

10. Capteur selon l'une des revendications 1 à 9, **caractérisé en ce que** le substrat est un circuit imprimé multicouche.

11. Capteur selon l'une des revendications 1 à 9, **caractérisé en ce que** le substrat est une céramique multicouche.
